# EUROPÄISCHE PATENTSCHRIFT

(11) **EP 2 818 405 B1**
(45) Veröffentlichungstag und Bekanntmachung des Hinweises auf die Patenterteilung: **05.09.2018**
(21) Anmeldenummer: 14173490.5
(22) Anmeldetag: 23.06.2014
(51) Int. Cl.: B64C 25/58, F16F 7/00

(54) **Sensorvorrichtung**
Sensor
Capteur

(30) Priorität: 26.06.2013 DE 102013010671
(43) Veröffentlichungstag der Anmeldung: 31.12.2014
(73) Patentinhaber: Liebherr-Aerospace Lindenberg GmbH, 88161 Lindenberg/Allgäu (DE)
(72) Erfinder: Rüf, Bachelor of Eng. (DH) Patricia, 5415 Nussbaumen (CH); Fugunt, Bachelor of Eng. (DH) Florian, 88410 Bad Wurzach (DE); Eckart, Dipl.-Ing. (FH) Martin, 88171 Simmerberg (DE)
(74) Vertreter: Herrmann, Uwe

(56) Entgegenhaltungen:
- EP-A2- 1 041 001
- WO-A1-2004/005748
- US-A- 2 764 371
- US-A1- 2004 222 788
- US-A1- 2008 264 743
- US-A1- 2011 147 514

## Beschreibung

Die vorliegende Erfindung betrifft eine Sensorvorrichtung zur Ermittlung des Zustands eines Fahrwerksbeins.

Sensorvorrichtungen zur Ermittlung des Zustands der Fahrwerksbeine von Flugzeugfahrwerken sind aus dem Stand der Technik bekannt. Dabei ist es geläufig, induktive Näherungssensoren zu verwenden. Diese sind üblicherweise im Bereich der Stoßdämpfer-Ausrichtungsstreben, der Lenkarme oder der Hilfsstreben für eine Kabelführung am Stoßdämpfergehäuse angebracht.

US 2008/0264743 A1 offenbart eine Sensorvorrichtung mit den Merkmalen des Oberbegriffs des Anspruchs 1. Die metallischen Signalgeber sind dabei entweder am axial beweglichen oberen Lenkarm oder an der oberen Hilfsstrebe vorgesehen. Bei Veränderung des Stoßdämpferhubes, wird der Signalgeber aus dem Signalbereich des Näherungssensors herausbewegt bzw. herausgedreht und dadurch das geforderte elektrische Signal erzeugt. Problematisch kann dabei sein, dass die außenliegenden Signalgeber beschädigt werden, vereisen oder verschmutzen können. Weiterhin kann von Nachteil sein, dass nach dem Stand der Technik nicht der Hub der Stoßdämpferanordnung eines Fahrwerks selbst gemessen wird, sondern vielmehr die Position bzw. die Auslenkung sekundärer Teile, die stark toleranzbehaftet sein können, wie z.B. die genannten Lenkarme oder Hilfsstreben gemessen werden, und daraus auf den Zustand des Fahrwerksbeins geschlossen wird. In Abhängigkeit von den entsprechenden Toleranzen kann sich diese Vorgehensweise negativ auf die Qualität der Messungen auswirken.

Aufgabe der vorliegenden Erfindung ist es daher, eine Sensorvorrichtung zur Ermittlung des Zustands eines Fahrwerksbeins vorteilhaft weiterzuentwickeln, insbesondere dahingehend, dass die Messtoleranzen verbessert und die Beschädigungs- und Verschmutzungsrisiken verringert werden.

Diese Aufgabe wird erfindungsgemäß durch eine Sensorvorrichtung mit den Merkmalen des Anspruchs 1 gelöst. Danach ist vorgesehen, dass die Sensorvorrichtung wenigstens einen ersten Signalgeber und wenigstens einen Signalsensor umfasst, wobei der Signalgeber an oder in der Schubstange des Fahrwerksbeins angeordnet ist, die relativ zu dem Gehäuse des Fahrwerksbeins ein- und ausfahrbar ist. Erfindungsgemäß ist vorgesehen, dass der Signalgeber aus einer in der Schubstange eingearbeiteten Kerbung besteht und dass der Signalgeber punktuell, vorzugsweise in einem reduziert beanspruchten Bereich der Schubstange vorgesehen ist.

Auf diese Weise wird eine robuste Ausführungsform bereitgestellt, bei der der Signalgeber vor Steinschlag, Vereisung, Reifenplatzern oder vor Beschädigungen durch Servicepersonal während Wartungsarbeiten besser geschützt ist. Auch wird die Messungsqualität erhöht, indem die Messung mittels des direkt an oder in der Schubstange vorgesehenen Signalgebers durchgeführt wird und nicht toleranzbehaftete sekundäre Teile zur Messung verwendet werden.

Die Toleranzkette wird somit reduziert und eine genauere Anzeige des Zustands des Fahrwerks ermöglicht.

Der Signalgeber ist im Grundmaterial der Schubstange integriert. Der Signalgeber kann unter einer Beschichtung der Schubstange vorgesehen sein. Daraus ergibt sich der Vorteil, kein zusätzliches Material bzw. keine zusätzlichen Komponenten zur Ausbildung des Signalgebers heranzuziehen, sondern diesen vielmehr aus dem bereits bestehenden und vorhandenen Grundmaterial der Schubstange auszubilden. Weiterhin kann sich der Signalgeber unter der Beschichtung der Schubstange befinden, sodass der Schutz des Signalgebers besonders gut gewährleistet ist.

Der Signalgeber besteht aus einer in der Schubstange eingearbeiteten Kerbung.

Eine Kerbung stellt dabei eine besonders einfache Ausführungsform eines im Grundmaterial der Schubstange integrierten Signalgebers dar, bei der zum einen auf das bereits vorhandene Grundmaterial der Schubstange zurückgegriffen werden kann und zum anderen einfache Herstellungsmethoden wie Fräsen zur Herstellung der Kerbung herangezogen werden können. Die Kerben können dabei ebenfalls mittels einer Beschichtung wieder verschlossen werden, wobei z.B. die heute gängige HVOF Schicht in Frage kommt.

Der Signalgeber ist punktuell an der Schubstange vorgesehen. So kann die Kerbung bzw. der Signalgeber in einem besonders bevorzugten Ausführungsbeispiel in einem reduziert beanspruchten Bereich der Schubstange angeordnet sein.

Denkbar ist es, dass der Signalgeber bzw. die Kerbung in einem Winkel, z.B. unter 45° relativ zur Flugrichtung vorgesehen ist. Der Signalgeber bzw. die Kerbung kann aus Halbrund-Nuten ausgeführt sein, wodurch eine Integration des Signalgebers in der Struktur der Schubstange ermöglicht wird, ohne negative Auswirkungen auf die Belastbarkeit des Bauteils und somit auf das Bauteilgewicht.

Es ist somit möglich, ein besonders gewichtsoptimiertes Design bereitzustellen. Halbrund-Nuten stellen dabei zusätzlich eine besonders einfach herzustellende Geometrie für den Signalgeber dar und können mit herkömmlichen Bearbeitungsmaschinen hergestellt werden. Die Richtung dieser Nuten ist dabei beliebig.

In einem weiteren Ausführungsbeispiel ist denkbar, dass der Signalsensor am Stoßdämpfergehäuse vorgesehen ist.

Besonders bevorzugt ist es, wenn der Signalsensor zwischen Stoßdämpferdichtungen platziert ist.

Alternativ oder zusätzlich dazu kann vorgesehen sein, dass der Signalsensor in einem völlig ausgefahrenen Zustand der Schubstange auf das Zentrum des Signalgebers ausgerichtet ist.

Der Signalsensor ist durch seine Position zwischen den Stoßdämpferdichtungen bzw. im Dichtungsträger des Fahrwerksbeins integriert besser geschützt als nach dem Stand der Technik, sodass Beschädigungen des Signalsensors weitgehend vermieden werden. Auch ist durch die Ausrichtung auf das Zentrum ein möglichst sicherer Messvorgang gewährleistet.

In einem weiteren bevorzugten Ausführungsbeispiel ist denkbar, dass wenigstens ein zweiter Signalgeber in oder an der Schubstange vorgesehen ist, der sich von dem ersten Signalgeber unterscheidet. Somit ist es bei dem beschriebenen Konzept möglich, eine zusätzliche Signalgeberzone zum Beispiel am Ende des Stoßdämpferhubs anzubringen, die sich vom oben beschriebenen, beispielsweise punktuellen Signalgeberfeld unterscheidet. Damit wird beispielsweise ermöglicht, eine Überhubmessung bzw. -anzeige oder auch eine genaue Positionsmessung über den gesamten Hub auszuführen.

In einem besonders bevorzugten Ausführungsbeispiel ist dabei denkbar, dass der wenigstens eine zweite Signalgeber eine Kerbung umfasst, die unterschiedlich zur Kerbung des ersten Signalgebers ist und/oder die Halbrund-Nuten oder sonstige Markierungen aufweist, die unterschiedlich zueinander und/oder zu den Halbrund-Nuten oder sonstigen Markierungen des ersten Signalgebers beabstandet sind. Somit kann die Unterscheidung dadurch erreicht werden, dass umlaufende oder teilumlaufende Ringe bzw. Nuten mit unterschiedlichem Abstand platziert werden und so beim "Überfahren" durch den Signalsensor das generierte Signalbild eindeutig vom Überfahren eines anderen Signalfeldes, nämlich des punktuellen Signalfeldes, unterschieden werden kann.

In einem weiteren Ausführungsbeispiel ist denkbar, dass die Sensorvorrichtung redundant mit wenigstens je zwei Signalgebern und Signalsensoren je Fahrwerksbein ausgeführt ist.

Da die Erfindung anhand eines elektrischen Signals zuverlässig anzeigen soll, ob sich ein Flugzeug in der Luft befindet oder Kontakt zum Boden hat, ist sie besonders sicherheitsrelevant, sodass die Anzeige an jedem Fahrwerksbein des Flugzeugs jeweils redundant mit zwei Sensoren erzeugt werden kann.

Die Erfindung richtet sich ferner auf Fahrwerksbein eines Flugzeugfahrwerkes, wobei das Fahrwerksbein wenigstens eine Schubstange und wenigstens ein Stoßdämpfergehäuse umfasst, relativ zu dem die Schubstange bewegbar angeordnet ist, wobei das Fahrwerksbein mit wenigstens einer Sensorvorrichtung gemäß der Erfindung ausgeführt ist.

Die Erfindung betrifft des Weiteren ein Luftfahrzeug, insbesondere Flugzeug mit wenigstens einem solchen Fahrwerksbein.

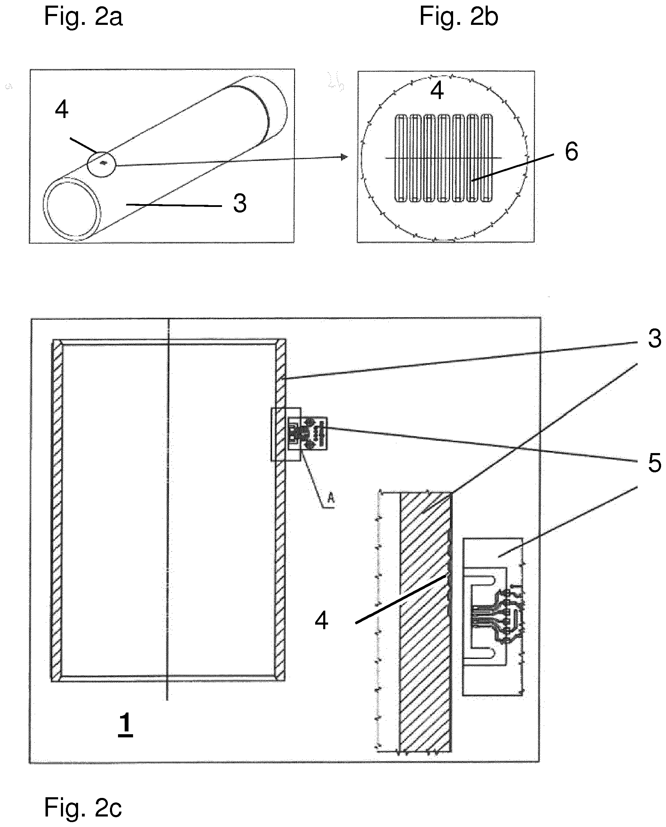

Weitere Einzelheiten und Vorteile der Erfindung sollen nun anhand eines in den Zeichnungen dargestellten Ausführungsbeispiels näher erläutert werden. Dabei bezieht sich Figur 2 auf eine nicht zur Erfindung gehörende Ausführung. Es zeigen:
Figur 1a: eine Ansicht eines Flugzeugfahrwerks;
Figur 1b: eine Detailansicht des Flugzeugfahrwerks;
Figur 1c: eine Detailansicht des Signalsensorbereichs;
Figur 2a: eine Schrägansicht einer Schubstange mit Signalgeber;
Figur 2b: eine Detailansicht eines Signalgebers; und
Figur 2c: eine schematische Detailansicht einer Sensorvorrichtung.

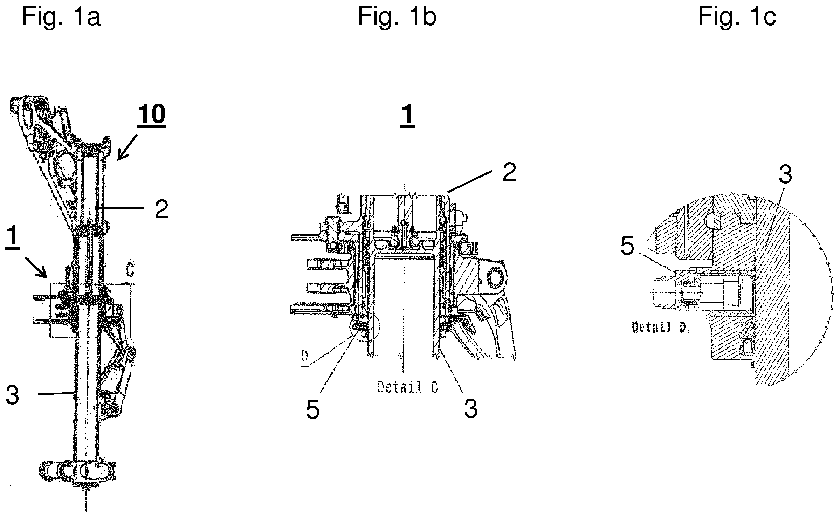

Figur 1a zeigt eine Übersichtsansicht eines Fahrwerksbeins 10 eines Flugzeugfahrwerks, wobei das Fahrwerksbein 10 ein Stoßdämpfergehäuse 2 und eine darin verschiebbar gelagerten Schubstange 3 aufweist. Im gezeigten Ausführungsbeispiel ist besonders der untere Abschnitt des Stoßdämpfergehäuses 2 von Interesse, in welchem der Signalsensor 5 aus Figur 1b vorgesehen ist. Das Bezugszeichen 1 kennzeichnet die z.B. magnetoresistiv arbeitende Sensorvorrichtung zur Feststellung der Position der Schubstange 3 relativ zum Stoßdämpfergehäuse 2.

Figur 1b zeigt den mit dem Buchstaben "C" beschriebenen vergrößerten Ausschnitt aus Figur 1a, in welchem nun der Signalsensor 5 im untersten Bereich des Stoßdämpfergehäuses 2 vorgesehen ist. Denkbar ist dabei, dass in einer redundant ausgeführten Ausführungsform zwei oder mehr Signalsensoren 5 im Stoßdämpfergehäuse 2 vorgesehen sind.

Die in Figur 1c gezeigte Detailansicht "D" zeigt weiterhin eine vergrößerte Ansicht des Signalsensorbereichs aus Figur 1b. Dabei ist zu erkennen, dass der Signalsensor 5 am und zumindest teilweise im Stoßdämpfergehäuse 2 vorgesehen ist und gleichzeitig in direkter Nähe der Schubstange 3 platziert ist. Somit kann der Signalsensor 5 direkt aufgrund der Schubstange 3 bzw. dem in der Schubstange 3 vorgesehenen Signalgeber 4 gemäß Figur 2a beeinflusst werden.

Figur 2a zeigt eine Schubstange 3, in deren Struktur ein Signalgeber 4 eingebracht ist. Im gezeigten Ausführungsbeispiel ist der Signalgeber 4 außen an der Schubstange 3 erkennbar. Jedoch ist genauso denkbar, dass der Signalgeber 4 unter einer Beschichtung liegt und somit gerade nicht von außen erkennbar ist.

Figur 2b zeigt eine Detailansicht eines Signalgebers 4, der im gezeigten Ausführungsbeispiel eine in die Schubstange 3 eingearbeitete Kerbung 6 umfasst. Die Kerbung 6 ist dabei so ausgelegt, dass sie mit dem Signalsensor 5 wechselwirken kann.

Figur 2c zeigt schließlich eine schematische Ansicht der Sensorvorrichtung 1, bei der der Signalsensor 5 und der in der Schubstange 3 eingearbeitete Signalgeber 4 miteinander in Wechselwirkung treten können. Der Signalsensor 5 kann dabei so angeordnet sein, dass er auf das Zentrum der Signalgeberfläche zeigt, wenn das Flugzeugfahrwerk 10 völlig ausgefahren ist. Dabei kann das Flugzeugfahrwerk 10 gänzlich unbelastet sein und das Flugzeug sich in einer Flug-, Lande- oder Abhebesituation befinden.

Die Sensorvorrichtung 1 kann ein elektrisches Signal generieren, welches z.B. an eine Anzeige geleitet werden kann, wenn z.B. an einem Fahrwerkbein ein vorgesehener Stoßdämpferhub überschritten wird. Eine solche Hubüberschreitung kann beispielsweise durch eine abweichende Stoßdämpfer-Füllung z.B. durch *Miss-Servicing* oder durch Leckage, oder aber auch durch Überschreitung der vorgesehen Belastung z.B. bei einer *Hard Landing* verursacht werden.

Grundsätzlich sind mit der erfindungsgemäßen Sensorvorrichtung auch weitere Messungen möglich, wie beispielsweise eine Überhubmessung oder eine genaue Positionsmessung über den gesamten Hub.

## Patentansprüche

1. Sensorvorrichtung (1) zur Ermittlung des Zustands eines Fahrwerksbeins (10) eines Fahrwerks eines Luftfahrzeuges, insbesondere eines Flugzeuges, umfassend:
eine Schubstange (3),
ein Stoßdämpfergehäuse (2), in dem die Schubstange (3) beweglich aufgenommen ist,
einen ersten Signalgeber (4), und
einen Signalsensor (5), wobei
der Signalgeber (4) an oder in der Schubstange (3) angeordnet ist,
**dadurch gekennzeichnet, dass**
der Signalgeber (4) aus einer in der Schubstange (3) eingearbeiteten Kerbung (6) besteht und dass
der Signalgeber (4) punktuell, vorzugsweise in einem reduziert beanspruchten Bereich der Schubstange (3) vorgesehen ist.

2. Sensorvorrichtung nach Anspruch 1, **dadurch gekennzeichnet, dass** der Signalgeber (4) innerhalb der Struktur der Schubstange (3) angeordnet ist.

3. Sensorvorrichtung (1) nach Anspruch 1 oder 2, **dadurch gekennzeichnet, dass** der Signalgeber (4) im Grundmaterial der Schubstange (3) integriert ist und/oder dass der Signalgeber (4) unter einer Beschichtung der Schubstange (3) angeordnet ist.

4. Sensorvorrichtung (1) nach einem der vorhergehenden Ansprüche, **dadurch gekennzeichnet, dass** der Signalgeber (4) aus einer Halbrund-Nut ausgeführt ist.

5. Sensorvorrichtung (1) nach einem der vorhergehenden Ansprüche, **dadurch gekennzeichnet, dass** der Signalsensor (5) am oder im Stoßdämpfergehäuse (2) vorgesehen ist.

6. Sensorvorrichtung (1) nach einem der vorhergehenden Ansprüche, **dadurch gekennzeichnet, dass** es sich um eine magnetoresistive Sensorvorrichtung handelt.

7. Sensorvorrichtung (1) nach einem der vorhergehenden Ansprüche, **dadurch gekennzeichnet, dass** der Signalsensor (5) zwischen Stoßdämpferdichtungen platziert ist und/oder in einem völlig ausgefahrenen Zustand der Schubstange (3) auf das Zentrum des Signalgebers (4) ausgerichtet ist.

8. Sensorvorrichtung (1) nach einem der vorhergehenden Ansprüche, **dadurch gekennzeichnet, dass** wenigstens ein zweiter Signlgeber an der Schubstange (3) vorgesehen ist, der sich von dem ersten Signalgeber (4) zumindest derart unterscheidet, dass der Signalsensor (5) im Hinblick auf den ersten Signalgeber (4) ein anderes Signal generiert als im Hinblick auf den zweiten Signalgeber.

9. Sensorvorrichtung (1) nach Anspruch 8, **dadurch gekennzeichnet, dass** der wenigstens eine zweite Signalgeber eine Kerbung (6) umfasst, die unterschiedlich zur ersten Kerbung (6) des ersten Signalgebers (4) nach Anspruch 1 ist und/oder die Halbrund-Nuten aufweist, die unterschiedlich zueinander und/oder zu der Halbrund-Nut des ersten Signalgebers (4) nach Anspruch 4 beabstandet sind.

10. Sensorvorrichtung (1) nach einem der vorhergehenden Ansprüche, **dadurch gekennzeichnet, dass** sie redundant mit wenigstens je zwei Signalgebern (4) und Signalsensoren (5) pro Fahrwerksbein (10) ausgeführt ist.

11. Fahrwerksbein (10) eines Flugzeugfahrwerkes mit wenigstens einer Sensorvorrichtung (1) nach einem der Ansprüche 1 bis 10.

12. Luftfahrzeug, insbesondere Flugzeug mit wenigstens einem Fahrwerksbein nach Anspruch 11.

## Claims

1. A sensor device (1) for determining the condition of a landing gear leg (10) of a landing gear of an aircraft, in particular of an airplane, comprising:
a push rod (3),
a shock absorber housing (2) in which the push rod (3) is movably accommodated,
a first signal generator (4), and
a signal sensor (5), wherein
the signal generator (4) is arranged on or in the push rod (3),
**characterized in that**
the signal generator (4) consists of a notch (6) incorporated in the push rod (3) and that
the signal generator (4) is provided at certain points, preferably in a region of the push rod (3) stressed to a reduced extent.

2. The sensor device according to claim 1, **characterized in that** the signal generator (4) is arranged within the structure of the push rod (3).

3. The sensor device (1) according to claim 1 or 2, **characterized in that** the signal generator (4) is integrated in the base material of the push rod (3) and/or that the signal generator (4) is arranged under a coating of the push rod (3).

4. The sensor device (1) according to any of the preceding claims, **characterized in that** the signal generator (4) is configured from a semicircular groove.

5. The sensor device (1) according to any of the preceding claims, **characterized in that** the signal sensor (5) is provided on or in the shock absorber housing (2).

6. The sensor device (1) according to any of the preceding claims, **characterized in that** it is a magnetoresitive sensor device.

7. The sensor device (1) according to any of the preceding claims, **characterized in that** the signal sensor (5) is placed between shock absorber seals and/or in a fully extended condition of the push rod (3) is aligned with the center of the signal generator (4).

8. The sensor device (1) according to any of the preceding claims, **characterized in that** at least one second signal generator is provided on the push rod (3), which differs from the first signal generator (4) at least such that the signal sensor (5) generates a different signal with regard to the first signal generator (4) than with regard to the second signal generator.

9. The sensor device (1) according to claim 8, **characterized in that** the at least one second signal generator comprises a notch (6) which is different from the first notch (6) of the first signal generator (4) according to claim 1 and/or which includes semicircular grooves that are spaced differently from each other and/or from the semicircular groove of the first signal generator (4) according to claim 4.

10. The sensor device (1) according to any of the preceding claims, **characterized in that** it is configured redundantly with at least two signal generators (4) and signal sensors (5) each per landing gear leg (10).

11. A landing gear leg (10) of an aircraft landing gear with at least one sensor device (1) according to any of claims 1 to 10.

12. An aircraft, in particular airplane with at least one landing gear leg according to claim 11.

## Revendications

1. Dispositif capteur (1) pour déterminer l'état d'une jambe de train d'atterrissage (10) d'un train d'atterrissage d'un aéronef, en particulier d'un avion, comportant :
une tige de poussée (3),
un boîtier amortisseur (2), dans lequel la tige de poussée (3) est logée de manière mobile,
un premier générateur de signaux (4), et
un capteur de signaux (5), dans lequel
le générateur de signaux (4) est agencé sur ou dans la tige de poussée (3),
**caractérisé en ce que**
le générateur de signaux (4) est constitué d'une encoche (6) incorporée dans la tige de poussée (3), et que
le générateur de signaux (4) est prévu ponctuellement, de préférence dans une zone de la tige de poussée (3) sollicitée dans une mesure réduite.

2. Dispositif capteur selon la revendication 1, **caractérisé en ce que** le générateur de signaux (4) est agencé dans la structure de la tige de poussée (3).

3. Dispositif capteur (1) selon la revendication 1 ou 2, **caractérisé en ce que** le générateur de signaux (4) est intégré dans le matériau de base de la tige de poussée (3) et/ou que le générateur de signaux (4) est agencé sous un revêtement de la tige de poussée (3).

4. Dispositif capteur (1) selon l'une quelconque des revendications précédentes, **caractérisé en ce que** le générateur de signaux (4) est configuré d'une rainure semi-circulaire.

5. Dispositif capteur (1) selon l'une quelconque des revendications précédentes, **caractérisé en ce que** le capteur de signaux (5) est prévu sur ou dans le boîtier amortisseur (2).

6. Dispositif capteur (1) selon l'une quelconque des revendications précédentes, **caractérisé en ce qu'**il s'agit d'un dispositif capteur magnétorésistif.

7. Dispositif capteur (1) selon l'une quelconque des revendications précédentes, **caractérisé en ce que** le capteur de signaux (5) est placé entre des joints d'amortisseur et/ou dans un état entièrement étendu de la tige de poussée (3) est aligné avec le centre du générateur de signaux (4).

8. Dispositif capteur (1) selon l'une quelconque des revendications précédentes, **caractérisé en ce qu'**au moins un deuxième générateur de signaux est prévu sur la tige de poussée (3), qui diffère du premier générateur de signaux (4) au moins de telle sorte que le capteur de signaux (5) génère un signal différent par rapport au premier générateur de signaux (4) que par rapport au deuxième générateur de signaux.

9. Dispositif capteur (1) selon la revendication 8, **caractérisé en ce que** le au moins un deuxième générateur de signaux comporte une encoche (6), qui est différente de la première encoche (6) du premier générateur de signaux (4) selon la revendication 1 et/ou comprend des rainures semi-circulaires, qui sont espacées différemment les unes des autres et/ou de la rainure semi-circulaire du premier générateur de signaux (4) selon la revendication 4.

10. Dispositif capteur (1) selon l'une quelconque des revendications précédentes, **caractérisé en ce qu'**il est configuré de manière redondante avec au moins deux générateurs de signaux (4) et capteurs de signaux (5) par jambe de train d'atterrissage (10).

11. Jambe de train d'atterrissage (10) d'un train d'atterrissage d'avion avec au moins un dispositif capteur (1) selon l'une quelconque des revendications 1 à 10.

12. Aéronef, en particulier avion avec au moins une jambe de train d'atterrissage selon la revendication 11.
